(19) Europäisches Patentamt / European Patent Office / Office européen des brevets

(11) **EP 2 461 476 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(51) Int Cl.:
*H02M 7/538* (2007.01)　　*H02M 1/40* (2007.01)

(21) Anmeldenummer: **11188611.5**

(22) Anmeldetag: **10.11.2011**

(54) **Verfahren zum Betrieb einer Umrichterschaltung**

Method for operating an inverter

Méthode pour controler un onduleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2010 EP 10193422**

(43) Veröffentlichungstag der Anmeldung:
**06.06.2012 Patentblatt 2012/23**

(73) Patentinhaber: **ABB Technology AG**
**8050 Zürich (CH)**

(72) Erfinder:
• **Buchmann, Beat**
**5415 Nussbaumen (CH)**

• **Ronner, Beat**
**5242 Birr (CH)**

(74) Vertreter: **ABB Patent Attorneys**
**C/o ABB Schweiz AG**
**Intellectual Property (CH-LI/IP)**
**Brown Boveri Strasse 6**
**5400 Baden (CH)**

(56) Entgegenhaltungen:
**EP-A2- 0 580 192　　US-A- 5 552 979**
**US-B1- 6 577 111**

## Beschreibung

## Technisches Gebiet

Die Erfindung bezieht sich auf das Gebiet der Leistungselektronik. Sie geht aus von einem Verfahren zum Betrieb einer Umrichterschaltung gemäss dem Oberbegriff des unabhängigen Anspruchs.

## Stand der Technik

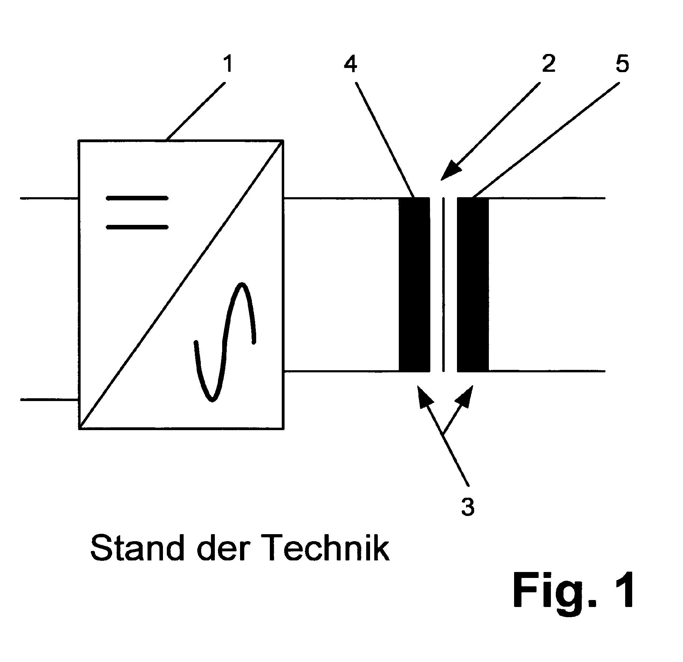

Herkömmliche Umrichterschaltungen umfassen heute eine Umrichtereinheit mit einer Vielzahl an ansteuerbaren Leistungshalbleiterschaltern, welche in bekannter Weise zur Schaltung von mindestens zwei Schaltspannungsniveaus verschaltet sind. Typischerweise ist eine solche Umrichterschaltung mit einem elektrischen Wechselspannungsnetz verbunden, welches beispielsweise einphasig oder dreiphasig ausgebildet ist. Solche Umrichterschaltungen werden häufig in Industrieanlagen eingesetzt, wobei die Wechselspannungsseite der Umrichtereinheit der Umrichterschaltung typischerweise über einen Transformator netzgekoppelt und wobei natürlich weitere Einsatzgebiete und Verwendungsmöglichkeiten, wie beispielsweise Windkraftanlagen, denkbar sind. In Fig. 1 ist beispielhaft eine solche Umrichterschaltung nach dem Stand der Technik gezeigt.

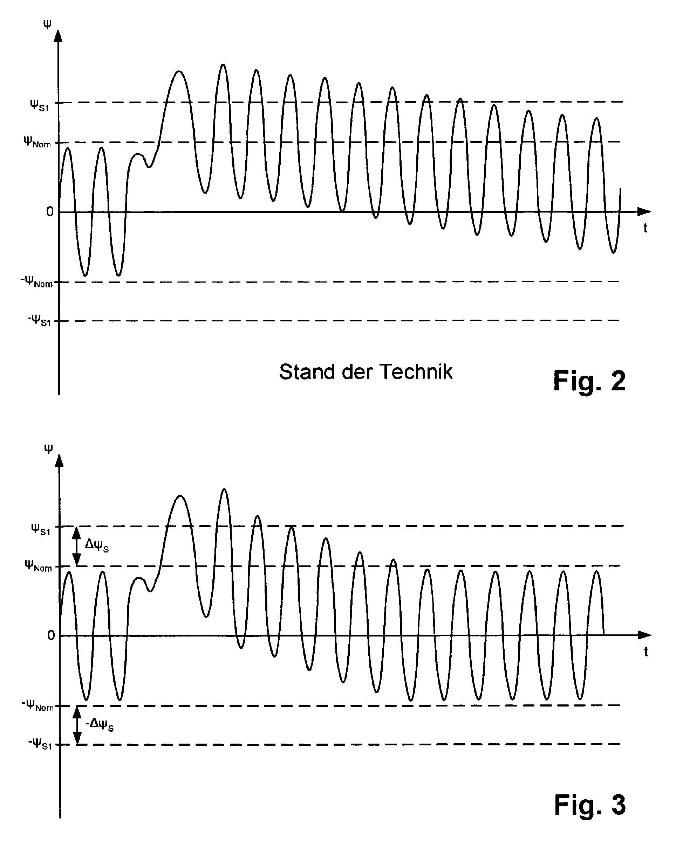

Beim Zuschalten des Transformators an ein Wechselspannungsnetz kann dieser sättigen. Eine solche Sättigung kann auch beim Wiederkehren der Spannung nach Netzfehlern auftreten. Das Ausmass der Sättigung ist von der Spannungszeitfläche während des Netzfehlers abhängig, d.h. also vorwiegend vom Wechselspannungsnetz gegeben. Typischerweise weist der magnetische Fluss des Transformators nach einem solchen Fehler oder beim Zuschalten des Transformators an das Wechselspannungsnetz einen markanten Gleichanteil auf, die dann zu Sättigung führt. Die Sättigung des Transformators ist aber hochgradig unerwünscht. In Fig. 2 ist beispielhaft ein solcher typischer zeitlicher Verlauf des magnetischen Flusses eines Wicklungssatzes des Transformators der Umrichterschaltung nach Fig. 1 dargestellt.

In der US 6,577,111 B1 ist ein gattungsgemässes Verfahren zum Betrieb einer Umrichterschaltung angegeben, welches unerwünschte Sättigungen eines Transformators der Umrichterschaltung zu kompensieren in der Lage ist, jedoch keine Rückführung des magnetischen Flusses unter den Betrag eines Nominalwertes des magnetischen Flusses des Transformators durchführt.

## Darstellung der Erfindung

Aufgabe der Erfindung ist es deshalb, ein Verfahren zum Betrieb einer Umrichterschaltung anzugeben, mittels welchem unerwünschte Sättigungen eines Transformators der Umrichterschaltung innerhalb kurzer Zeit kompensiert werden können.

Diese Aufgabe wird durch die Merkmale des Anspruchs 1 gelöst. In den abhängigen Ansprüchen sind vorteilhafte Weiterbildungen der Erfindung angegeben.

Die Umrichterschaltung umfasst eine Umrichtereinheit mit einer Vielzahl an ansteuerbaren Leistungshalbleiterschaltern und weist einen Transformator auf, wobei der Transformator mindestens einen Wicklungssatz mit einer Primärwicklung und einer Sekundärwicklung aufweist und die Umrichtereinheit wechselspannungsseitig mit der Primärwicklung des jeweiligen Wicklungssatzes verbunden ist. Das erfindungsgemässe Verfahren zum Betrieb einer solchen Umrichterschaltung weist folgende Schritte auf:

    a) Überwachung des Betrages des magnetischen Flusses eines jeden Wicklungssatzes auf einen Schwellwert hin, wobei die Polarität des magnetischen Flusses ermittelt wird,
    b) falls der Betrag des magnetischen Flusses durch den jeweiligen Wicklungssatz den Schwellwert überschreitet und die Polarität des magnetischen Flusses durch den jeweiligen Wicklungssatz positiv ist, Anlegen einer einstellbaren negativen Gleichspannung an die Primärwicklung des jeweiligen Wicklungssatzes durch die Umrichtereinheit ,
    c) falls der Betrag des magnetischen Flusses durch den jeweiligen Wicklungssatz den Schwellwert überschreitet und die Polarität des magnetischen Flusses durch den jeweiligen Wicklungssatz negativ ist, Anlegen einer einstellbaren positiven Gleichspannung an die Primärwicklung des jeweiligen Wicklungssatzes durch die Umrichtereinheit,
    d) Wiederholung der Schritte a) bis c) solange bis der Betrag des magnetischen Flusses durch den jeweiligen Wicklungssatz den Schwellwert unterschreitet,
    e) nachdem der Betrag des magnetischen Flusses durch den jeweiligen Wicklungssatz den Schwellwert unterschritten hat und falls die Polarität des magnetischen Flusses durch den jeweiligen Wicklungssatz positiv ist, Anlegen der einstellbaren negativen Gleichspannung an die Primärwicklung des jeweiligen Wicklungssatzes durch die Umrichtereinheit so lange, bis die Spannungs-Zeitfläche bzgl. der angelegten negativen Gleichspannung kleiner oder gleich bezüglich eines vorgebbaren negativen Flusswertes ist, und
    f) nachdem der Betrag des magnetischen Flusses durch den jeweiligen Wicklungssatz den Schwellwert unterschritten hat und falls die Polarität des magnetischen Flusses durch den jeweiligen Wicklungssatz negativ ist, Anlegen der einstellbaren positiven Gleichspannung an die Primärwicklung des jeweiligen Wicklungssatzes durch die Umrichtereinheit so lange, bis die Spannungs-Zeitfläche bzgl. der angelegten positiven Gleichspannung grösser oder gleich bezüglich eines vorgebbaren positiven Flusswertes ist.

Der Schwellwert ist der Wert, oberhalb diesem die Sättigung des Transformators beginnt. Die vorstehend genannten Schritte a) bis d) bewirken vorteilhaft, dass bei einer Sättigung des jeweiligen Wicklungssatzes des Transformators diese in einfacher und schneller Weise durch Anlegen einer positiven bzw. negativen Gleichspannung durch die Umrichtereinheit kompensiert wird, d.h. der magnetische Fluss durch den jeweiligen Wicklungssatz aus dem Sättigungsbereich geholt wird. Liegt keine Sättigung des jeweiligen Wicklungssatzes des Transformators mehr vor, d.h. nachdem der Betrag des magnetischen Flusses durch den jeweiligen Wicklungssatz den Schwellwert unterschritten hat, wird durch die Schritte e) bzw. f) mit Vorteil erreicht, dass der magnetische Fluss des jeweiligen Wicklungssatzes beispielsweise wieder unter den Betrag eines Nominalwertes des magnetischen Flusses des Transformators gebracht werden kann, wobei der Betrag des Nominalwertes des magnetischen Flusses beispielweise der um den Flusswert reduzierte Schwellwert ist. Das erfinderische Verfahren erreicht damit insgesamt den gewünschten Effekt der Kompensation einer auftretenden Sättigung des Transformators sowie eine Rückführung des magnetischen Flusses durch den jeweiligen Wicklungssatz unter den Betrag des Nominalwertes des magnetischen Flusses in besonders einfacher Weise.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1    einen Umrichterschaltung nach dem Stand der Technik,

Fig. 2    einen typischen zeitlichen Verlauf des magnetischen Flusses eines Wicklungssatzes eines Transformators der Umrichterschaltung nach Fig. 1,

Fig. 3    einen zeitlichen Verlauf des magnetischen Flusses eines Wicklungssatzes des Transformators der Umrichterschaltung nach dem erfindungsgemässen Verfahren,

Fig. 4    ein übliches T-Ersatzschaltbild eines Transformators und

Fig. 5    eine Magnetisierungsstrom-Fluss-Kennlinie eines Transformators.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugzeichen versehen. Die beschriebenen Ausführungsformen stehen beispielhaft für den Erfindungsgegenstand und haben keine beschränkende Wirkung.

## Wege zur Ausführung der Erfindung

Wie bereits eingangs erwähnt zeigt Fig. 1 eine bekannte Umrichterschaltung, die eine Umrichtereinheit 1 mit einer Vielzahl an ansteuerbaren Leistungshalbleiterschaltern aufweist und zudem einen Transformator 2 aufweist, wobei der Transformator 2 allgemein mindestens einen Wicklungssatz 3 mit einer Primärwicklung 4 und einer Sekundärwicklung 5 aufweist und die Umrichtereinheit 1 wechselspannungsseitig mit der Primärwicklung 4 des jeweiligen Wicklungssatzes 3 verbunden ist. In Fig. 1 ist der Transformator 2 beispielhaft einphasig ausgeführt und weist demnach nur einen einzigen Wicklungssatz 3 auf.

Das erfindungsgemässe Verfahren zum Betrieb der Umrichterschaltung weist nun folgende Schritte auf:

a) Überwachung des Betrages des magnetischen Flusses $_\Psi$ eines jeden Wicklungssatzes 3 auf einen Schwellwert $\Psi_{S1}$ hin, wobei die Polarität des magnetischen Flusses $\Psi$ ermittelt wird,

b) falls der Betrag des magnetischen Flusses $\Psi$ durch den jeweiligen Wicklungssatz 3 den Schwellwert $\Psi_{S1}$ überschreitet und die Polarität des magnetischen Flusses $\Psi$ durch den jeweiligen Wicklungssatz 3 positiv ist, Anlegen einer einstellbaren negativen Gleichspannung $u_{omp}$ an die Primärwicklung 4 des jeweiligen Wicklungssatzes durch die Umrichtereinheit 1,

c) falls der Betrag des magnetischen Flusses $\Psi$ durch den jeweiligen Wicklungssatz 3 den Schwellwert $\Psi_{S1}$ überschreitet und die Polarität des magnetischen Flusses $\Psi$ durch den jeweiligen Wicklungssatz 3 negativ ist, Anlegen einer einstellbaren positiven Gleichspannung $u_{comp}$ an die Primärwicklung 4 des jeweiligen Wicklungssatzes 3 durch die Umrichtereinheit 1,

d) Wiederholung der Schritte a) bis c) solange bis der Betrag des magnetischen Flusses $\Psi$ durch den jeweiligen Wicklungssatz 3 den Schwellwert $_{\Psi S1}$ unterschreitet,

e) nachdem der Betrag des magnetischen Flusses $_\Psi$ durch den jeweiligen Wicklungssatz 3 den Schwellwert $\Psi_{S1}$ unterschritten hat und die Polarität des magnetischen Flusses $_\Psi$ durch den jeweiligen Wicklungssatz 3 positiv ist, Anlegen der einstellbaren negativen Gleichspannung $u_{-comp}$ an die Primärwicklung 4 des jeweiligen Wicklungssatzes 3 durch die Umrichtereinheit 1 so lange, bis die Spannungs-Zeitfläche bzgl. der angelegten negativen Gleichspannung $u_{comp}$ kleiner oder gleich bezüglich eines vorgebbaren negativen Flusswertes $-\Delta_{\psi_S}$ ist, und

f) nachdem der Betrag des magnetischen Flusses $_\psi$ durch den jeweiligen Wicklungssatz 3 den Schwellwert $\Psi_{S1}$ unterschritten hat und falls die Polarität des magnetischen Flusses $_\psi$ durch den jeweiligen Wicklungssatz 3 negativ ist, Anlegen der einstellbaren positiven Gleichspannung $u_{comp}$ an die Primärwicklung 4 des jeweiligen Wicklungssatzes 3 durch die Umrichtereinheit 1 so lange, bis die Spannungs-Zeitfläche bzgl. der angelegten positiven Gleichspannung $u_{comp}$ grösser oder gleich bezüglich eines vorgebbaren positiven Flusswertes $\Delta_{\psi_S}$ ist.

Der Schwellwert $\Psi_{S1}$ bezeichnet den Wert, oberhalb diesem die Sättigung des Transformators 2 beginnt. Die vorstehend genannten Schritte a) bis d) bewirken somit vorteilhaft, dass bei einer Sättigung des jeweiligen Wicklungssatzes 3 des Transformators 2 diese in einfacher und schneller Weise durch Anlegen einer positiven bzw. negativen Gleichspannung $u_{comp}$ durch die Umrichtereinheit 1 kompensiert wird, d.h. der magnetische Fluss $_\psi$ durch den jeweiligen Wicklungssatz 3 aus dem Sättigungsbereich geholt wird. Liegt keine Sättigung des jeweiligen Wicklungssatzes 3 des Transformators 2 mehr vor, d.h. nachdem der Betrag des magnetischen Flusses $_\psi$ durch den jeweiligen Wicklungssatz 3 den Schwellwert $\Psi_{S1}$ unterschritten hat, wird durch die Schritte e) bzw. f) vorteilhaft erreicht, dass der magnetische Fluss $_\psi$ des jeweiligen Wicklungssatzes 3 beispielsweise wieder unter den Betrag eines Nominalwertes $\Psi_{Nom}$ des magnetischen Flusses $_\psi$ des Transformators 1 gebracht werden kann, wobei der Betrag des Nominalwertes $_{\psi Nom}$ des magnetischen Flusses $_\psi$ beispielweise der um den Flusswert $\Delta_{\psi_S}$ reduzierte Schwellwert $\Psi_{S1}$ ist, d.h.

$$\Delta\psi_S = \psi_{S1} - \psi_{Nom}$$

gilt.

Das erfinderische Verfahren erreicht damit insgesamt den gewünschten Effekt der Kompensation einer auftretenden Sättigung des Transformators 1 sowie eine Rückführung des magnetischen Flusses $_\psi$ durch den jeweiligen Wicklungssatz 3 unter den Betrag des Nominalwertes $\Psi_{Nom}$ des magnetischen Flusses $_\psi$ in besonders einfacher Weise.

Die unter Schritt e) genannte Spannungs-Zeitfläche berechnet sich wie folgt:

$$\int u_{comp}\, dt,$$

wobei gemäss Schritt e) dann die einstellbare negativen Gleichspannung $u_{comp}$ so lange an die Primärwicklung 4 des jeweiligen Wicklungssatzes 3 durch die Umrichtereinheit 1 angelegt wird, bis die Spannungs-Zeitfläche bzgl. der angelegten negativen Gleichspannung $u_{comp}$ kleiner oder gleich bezüglich des vorgebbaren negativen Flusswertes $-\Delta_{\psi_S}$ ist, d.h.

$$\int u_{comp}\, dt \leq -\Delta\psi_S$$

gilt.

Desweiteren berechnet sich die unter Schritt f) genannte Spannungs-Zeitfläche wie folgt:

$$\int u_{comp}\, dt,$$

wobei gemäss Schritt f) dann die einstellbare positive Gleichspannung $u_{comp}$ so lange an die Primärwicklung 4 des jeweiligen Wicklungssatzes 3 durch die Umrichtereinheit 1 angelegt wird, bis die Spannungs-Zeitfläche bzgl. der angelegten positiven Gleichspannung $u_{comp}$ grösser oder gleich bezüglich des vorgebbaren positiven Flusswertes $\Delta_{\psi_S}$ ist, d.h.

$$\int u_{comp}\, dt \geq \Delta\psi_S$$

gilt.

Der Umrichter kann jedoch die Sättigung bedeutend schneller abklingen lassen, indem er eine Gleichspannung an den Transformator anlegt, der den Fluss aus der Sättigung zurückholt. Begrenzend für die Zeit, in der dies geschieht, sind die dabei auftretenden Gleichströme.

Vorzugsweise umfasst das erfindungsgemässe Verfahren nach einer weiteren Ausgestaltung der Erfindung folgende weitere Schritte:

g) während der Schritte e) und f) Überwachung des Betrages des magnetischen Flusses $_\psi$ eines jeden Wicklungssatzes 3 auf einen Schwellwert $\Psi_{S1}$ hin, wobei die Polarität des magnetischen Flusses $_\psi$ ermittelt wird,

h) falls während Schritt e) der Betrag des magnetischen Flusses $_\psi$ durch den jeweiligen Wicklungssatz 3 den Schwellwert $\Psi_{S1}$ überschreitet und die Polarität des magnetischen Flusses $_\psi$ durch den jeweiligen Wicklungssatz 3 positiv ist, Schritt e) aussetzen und weiter mit den Schritten b) und d), und dann weiter mit den Schritten e) und f) und

i) falls während Schritt f) der Betrag des magnetischen Flusses $_\psi$ durch den jeweiligen Wicklungssatz 3 den Schwellwert $\Psi_{S1}$ überschreitet und die Polarität des magnetischen Flusses $_\psi$ durch den jeweiligen Wicklungssatz 3 negativ ist, Schritt f) aussetzen und weiter mit den Schritten c) und d), und dann weiter mit den Schritten e) und f).

Der vorstehend genannte Schritt h) in Verbindung mit Schritt g) stellt sicher, dass falls während Schritt e) eine Sättigung des jeweiligen Wicklungssatzes 3 des Transformators 2 bei positivem magnetischen Fluss $_\Psi$ auftritt, diese Sättigung in einfacher und schneller Weise durch Anlegen der negativen Gleichspannung $u_{comp}$ durch die Umrichtereinheit 1 kompensiert wird, d.h. der magnetische Fluss $_\Psi$ durch den jeweiligen Wicklungssatz 3 aus dem Sättigungsbereich geholt wird. Tritt während dem vorstehend genannten Schritt f) eine Sättigung des jeweiligen Wicklungssatzes 3 des Transformators 2 bei negativem magnetischen Fluss $_\Psi$ auf, so ermöglicht der vorstehend genannte Schritt i) in Verbindung mit Schritt g), dass durch Anlegen der positiven Gleichspannung $u_{comp}$ durch die Umrichtereinheit 1 kompensiert wird, d.h. der magnetische Fluss $_\Psi$ durch den jeweiligen Wicklungssatz 3 aus dem Sättigungsbereich geholt wird.

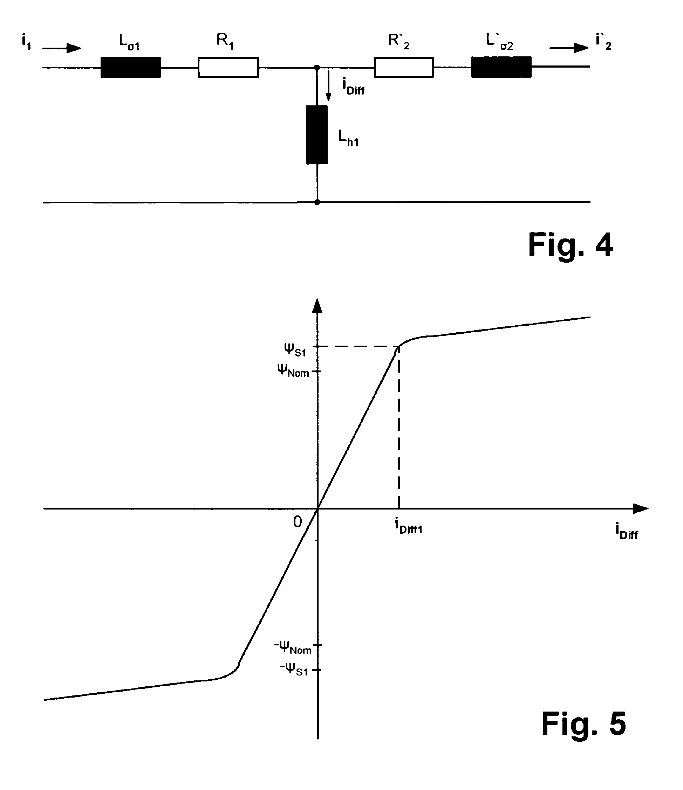

Vorzugsweise erfolgt die Überwachung des Betrages des magnetischen Flusses $_\Psi$ auf den Schwellwert $_{\Psi S1}$ hin und die Ermittlung der Polarität des magnetischen Flusses $_\Psi$ mittels Überwachung eines Differenzstromes $i_{Diff}$ auf einen Differenzstromschwellwert $i_{Diff1}$, wobei der Differenzstrom $i_{diff}$ aus dem Strom $i_1$ durch die Primärwicklung 4 und aus dem Strom $i'_2$ durch die Sekundärwicklung 5 des jeweiligen Wicklungssatzes 3, insbesondere unter Berücksichtigung des Wicklungsverhältnisses, ermittelt wird. In Fig. 4 ist dazu ein übliches T-Ersatzschaltbild eines Transformators 1 gezeigt, der den Strom $i_1$ durch die Primärwicklung 4, den Strom $i'_2$ durch die Sekundärwicklung 5 sowie den Differenzstromes $i_{Diff}$ durch die Hauptinduktivität $L_{h1}$ des jeweiligen Wicklungssatzes 3 zeigt. Der Differenzstrom $i_{Diff}$ ist der Magnetisierungsstrom des zugehörigen Wicklungssatzes 3 des Transformators. Desweiteren ist in Fig. 5 eine Magnetisierungsstrom-Fluss-Kennlinie eines Transformators 1 dargestellt, aus der ersichtlich ist, wie der Differenzstromschwellwert $i_{Diff1}$ mit dem Schwellwert $\Psi_{S1}$ zusammenhängt. Zur Überwachung des Differenzstromes $i_{Diff}$ auf einen Differenzstromschwellwert $i_{Diff1}$ muss also lediglich der Differenzstrom $i_{Diff}$ aus dem Strom $i_1$ durch die Primärwicklung 4 und dem Strom $i'_2$ durch die Sekundärwicklung 5 ermittelt werden, wobei der Strom $i_1$ durch die Primärwicklung 4 und der Strom $i'_2$ durch die Sekundärwicklung 5 gemessen werden. Dann kann über den Zusammenhang von Differenzstrom $i_{Diff}$ und magnetischem Fluss gemäss Fig. 5 die Überwachung des Differenzstromes $i_{Diff}$ auf den Differenzstromschwellwert $i_{Diff1}$ erfolgen, der gemäss Fig. 5 mit dem Schwellwert $\Psi_{S1}$ zusammenhängt. Da der der Differenzstrom $i_{Diff}$ sehr einfach über den Strom $i_1$ durch die Primärwicklung 4 und den Strom $i'_2$ durch die Sekundärwicklung 5 zu ermitteln ist, ist die Überwachung des Betrages des magnetischen Flusses $_\Psi$ auf den Schwellwert $\Psi_{S1}$ hin und die Ermittlung der Polarität des magnetischen Flusses $_\Psi$ mittels Überwachung eines Differenzstromes $i_{Diff}$ auf den Differenzstromschwellwert $i_{Diff1}$ mit Vorteil denkbar einfach auszuführen.

Es ist auch denkbar, dass die Überwachung des Betrages des magnetischen Flusses $_\Psi$ auf den Schwellwert $_{\Psi S1}$ hin und die Ermittlung der Polarität des magnetischen Flusses $_\Psi$ mittels eines Modells des magnetischen Flusses $_\Psi$ erfolgt, bei dem der magnetische Fluss $_\Psi$ aus der Spannung an der Primärwicklung 4 oder aus der Spannung der Sekundärwicklung 5 des jeweiligen Wicklungssatzes 3 ermittelt wird, wobei allgemein

$$\Psi = \int u_{Mag}\, dt$$

gilt und $u_{Mag}$ dann allgemein die Magnetisierungsspannung des Transformators 1 ist. Diese kann aus den gemessenen Spannungen und Strömen, unter Berücksichtigung der Transformatorwiderstände und Streuimpedanzen auf dem Fachmann bekannte Art bekannte Art und Weise berechnet werden. Zudem lässt sich der Schwellwert $\Psi_{S1}$ und der Flusswertes $\Delta_{\Psi s}$ für die Überwachung vorgeben, beispielsweise über die in Fig. 5 dargestellte Magnetisierungsstrom-Fluss-Kennlinie des Transformators

**Bezugszeichenliste**

1    Umrichtereinheit

2    Transformator

3    Wicklungssatz

4    Primärwicklung

5    Sekundärwicklung

**Patentansprüche**

1.    Verfahren zum Betrieb einer Umrichterschaltung, wobei die Umrichterschaltung eine Umrichtereinheit (1) mit einer Vielzahl an ansteuerbaren Leistungshalbleiterschaltern aufweist und einen Transformator (2) aufweist, wobei der Transformator (2) mindestens einen Wicklungssatz (3) mit einer Primärwicklung (4) und einer Sekundärwicklung (5) aufweist und die Umrichtereinheit (1) wechselspannungsseitig mit der Primärwicklung (4) des jeweiligen Wicklungssatzes (3) verbunden ist,
**dadurch gekennzeichnet,**
**dass** das Verfahren folgende Schritte aufweist:

    a) Überwachung des Betrages des magnetischen Flusses ($\psi$) eines jeden Wicklungssatzes (3) auf einen Schwellwert ($\psi_{S1}$) hin, wobei die Polarität des magnetischen Flusses ($\psi$) ermittelt wird,

b) falls der Betrag des magnetischen Flusses ($\psi$) durch den jeweiligen Wicklungssatz (3) den Schwellwert ($\psi_{S1}$) überschreitet und die Polarität des magnetischen Flusses ($\psi$) durch den jeweiligen Wicklungssatz (3) positiv ist, Anlegen einer einstellbaren negativen Gleichspannung ($U_{comp}$) an die Primärwicklung (4) des jeweiligen Wicklungssatzes durch die Umrichtereinheit (1),

c) falls der Betrag des magnetischen Flusses ($\psi$) durch den jeweiligen Wicklungssatz (3) den Schwellwert ($\psi_{S1}$) überschreitet und die Polarität des magnetischen Flusses ($\psi$) durch den jeweiligen Wicklungssatz (3) negativ ist, Anlegen einer einstellbaren positiven Gleichspannung ($u_{comp}$) an die Primärwicklung (4) des jeweiligen Wicklungssatzes (3) durch die Umrichtereinheit (1),

d) Wiederholung der Schritte a) bis c) solange bis der Betrag des magnetischen Flusses ($\psi$) durch den jeweiligen Wicklungssatz (3) den Schwellwert ($\psi_{S1}$) unterschreitet,

e) nachdem der Betrag des magnetischen Flusses ($\psi$) durch den jeweiligen Wicklungssatz (3) den Schwellwert ($\psi_{S1}$) unterschritten hat und falls die Polarität des magnetischen Flusses ($\psi$) durch den jeweiligen Wicklungssatz (3) positiv ist, Anlegen der einstellbaren negativen Gleichspannung ($u_{comp}$) an die Primärwicklung (4) des jeweiligen Wicklungssatzes (3) durch die Umrichtereinheit (1) so lange, bis die Spannungs-Zeitfläche bzgl. der angelegten negativen Gleichspannung ($u_{comp}$) kleiner oder gleich bezüglich eines vorgebbaren negativen Flusswertes ($-\Delta\psi_s$) ist, und

f) nachdem der Betrag des magnetischen Flusses ($\psi$) durch den jeweiligen Wicklungssatz (3) den Schwellwert ($\psi_{S1}$) unterschritten hat und falls die Polarität des magnetischen Flusses ($\psi$) durch den jeweiligen Wicklungssatz (3) negativ ist, Anlegen der einstellbaren positiven Gleichspannung ($u_{comp}$) an die Primärwicklung (4) des jeweiligen Wicklungssatzes (3) durch die Umrichtereinheit (1) so lange, bis die Spannungs-Zeitfläche bzgl. der angelegten positiven Gleichspannung ($u_{comp}$) grösser oder gleich bezüglich eines vorgebbaren positiven Flusswertes ($\Delta\psi_S$) ist.

2. Verfahren nach Anspruch 1, **gekennzeichnet durch** die weiteren Schritte:

j) während der Schritte e) und f) Überwachung des Betrages des magnetischen Flusses ($\psi$) eines jeden Wicklungssatzes (3) auf den Schwellwert $\psi_{S1}$ hin, wobei die Polarität des magnetischen Flusses ($\psi$) ermittelt wird,

k) falls während Schritt e) der Betrag des magnetischen Flusses ($\psi$) **durch** den jeweiligen Wicklungssatz (3) den Schwellwert ($\psi_{S1}$) überschreitet und die Polarität des magnetischen Flusses ($\psi$) **durch** den jeweiligen Wicklungssatz (3) positiv ist, Schritt e) aussetzen und weiter mit den Schritten b) und d), und dann weiter mit den Schritten e) und f) und

l) falls während Schritt f) der Betrag des magnetischen Flusses ($\psi$) **durch** den jeweiligen Wicklungssatz (3) den Schwellwert ($\psi_{S1}$) überschreitet und die Polarität des magnetischen Flusses ($\psi$) **durch** den jeweiligen Wicklungssatz (3) negativ ist, Schritt f) aussetzen und weiter mit den Schritten c) und d), und dann weiter mit den Schritten e) und f).

3. Verfahren nach Anspruch 1, **dadurch gekennzeichnet, dass** die Überwachung des Betrages des magnetischen Flusses ($\psi$)) und die Ermittlung der Polarität des magnetischen Flusses ($\psi$)) mittels Überwachung eines Differenzstromes ($b_{Diff}$) auf einen Differenzstromschwellwert ($i_{Diff1}$) erfolgt, wobei der Differenzstrom ($i_{Diff}$) aus dem Strom ($i_1$) durch die Primärwicklung (4) und aus dem Strom ($i'_2$) durch die Sekundärwicklung (5) des jeweiligen Wicklungssatzes (3) ermittelt wird.

4. Verfahren nach Anspruch 1, **dadurch gekennzeichnet, dass** die Überwachung des Betrages des magnetischen Flusses ($\psi$) mittels eines Modells des magnetischen Flusses ($\psi$) erfolgt.

**Claims**

1. Method for operating a converter circuit, the converter circuit having a converter unit (1) with a multiplicity of controllable power semiconductor switches and having a transformer (2), the transformer (2) having at least one winding set (3) with a primary winding (4) and a secondary winding (5), and the converter unit (1) being connected, on the AC voltage side, to the primary winding (4) of the respective winding set (3), **characterized in that** the method has the following steps:

a) the magnitude of the magnetic flux ($\psi$) of each winding set (3) is monitored with respect to a threshold value ($\psi_{S1}$), the polarity of the magnetic flux ($\psi$) being determined,

b) if the magnitude of the magnetic flux ($\psi$) through the respective winding set (3) exceeds the threshold value ($\psi_{S1}$) and the polarity of the magnetic flux ($\psi$) through the respective winding set (3) is positive, the converter unit (1) applies an adjustable negative DC voltage ($u_{comp}$) to the primary winding (4) of the respective winding set,

c) if the magnitude of the magnetic flux ($\psi$) through the respective winding set (3) exceeds the threshold value ($\psi_{S1}$) and the polarity of the magnetic flux ($\psi$) through the respective winding set (3) is negative, the converter unit (1) applies an adjustable positive DC voltage ($u_{comp}$) to the primary winding (4) of the respective winding set (3),

d) steps a) to c) are repeated until the magnitude of the magnetic flux ($\psi$) through the respective winding set (3) undershoots the threshold value ($\psi_{S1}$),

e) after the magnitude of the magnetic flux ($\psi$) through the respective winding set (3) has undershot the threshold value ($\psi_{S1}$) and if the polarity of the magnetic flux ($\psi$) through the respective winding set (3) is positive, the converter unit (1) applies the adjustable negative DC voltage ($u_{comp}$) to the primary winding (4) of the respective winding set (3) until the voltage/time integral of the applied negative DC voltage ($u_{comp}$) is less than or equal to a predefinable negative flux value ($-\Delta\psi_S$), and

f) after the magnitude of the magnetic flux ($\psi$) through the respective winding set (3) has undershot the threshold value ($\psi_{S1}$) and if the polarity of the magnetic flux ($\psi$) through the respective winding set (3) is negative, the converter unit (1) applies the adjustable positive DC voltage ($u_{comp}$) to the primary winding (4) of the respective winding set (3) until the voltage/time integral of the applied positive DC voltage ($u_{comp}$) is greater than or equal to a predefinable positive flux value ($\Delta\psi_S$).

2. Method as claimed in Claim 1, **characterized by** the following further steps:

j) during steps e) and f), the magnitude of the magnetic flux ($\psi$) of each winding set (3) is monitored with respect to the threshold value ($\psi_{S1}$), the polarity of the magnetic flux ($\psi$) being determined,

k) if, during step e), the magnitude of the magnetic flux ($\psi$) through the respective winding set (3) exceeds the threshold value ($\psi_{S1}$) and the polarity of the magnetic flux ($\psi$) through the respective winding set (3) is positive, step e) is suspended and the method continues with steps b) and d) and then with steps e) and f), and

l) if, during step f), the magnitude of the magnetic flux ($\psi$) through the respective winding set (3) exceeds the threshold value ($\psi_{S1}$) and the polarity of the magnetic flux ($\psi$) through the respective winding set (3) is negative, step f) is suspended and the method continues with steps c) and d) and then with steps e) and f).

3. Method as claimed in Claim 1, **characterized in that** the operations of monitoring the magnitude of the magnetic flux ($\psi$) and determining the polarity of the magnetic flux ($\psi$) are carried out by monitoring a differential current ($i_{Diff}$) with respect to a differential current threshold value ($i_{Diff1}$), the differential current ($i_{Diff}$) being determined from the current ($i_1$) through the primary winding (4) and from the current ($i'_2$) through the secondary winding (5) of the respective winding set (3).

4. Method as claimed in Claim 1, **characterized in that** the magnitude of the magnetic flux ($\psi$) is monitored using a model of the magnetic flux ($\psi$).

**Revendications**

1. Procédé pour faire fonctionner un circuit convertisseur, le circuit convertisseur présentant une unité de conversion (1) comprenant une pluralité de commutateurs semiconducteurs de puissance commandables et un transformateur (2), le transformateur (2) présentant au moins un jeu d'enroulements (3) comprenant un enroulement primaire (4) et un enroulement secondaire (5) et l'unité de conversion (1) étant reliée du côté de la tension alternative avec l'enroulement primaire (4) du jeu d'enroulements (3) correspondant,

**caractérisé en ce**
**que** le procédé présente les étapes suivantes :

a) surveillance de la valeur du flux magnétique ($\psi$) de chaque jeu d'enroulements (3) par rapport à une valeur de seuil ($\psi_{S1}$), la polarité du flux magnétique ($\psi$) étant déterminée,
b) si la valeur du flux magnétique ($\psi$) à travers le jeu d'enroulements (3) correspondant dépasse la valeur de seuil ($\psi_{S1}$) et la polarité du flux magnétique ($\psi$) à travers le jeu d'enroulements (3) correspondant est positive, application d'une tension continue négative ($u_{comp}$) réglable aux bornes de l'enroulement primaire (4) du jeu d'enroulements correspondant par l'unité de conversion (1),
c) si la valeur du flux magnétique ($\psi$) à travers le jeu d'enroulements (3) correspondant dépasse la valeur de seuil ($\psi_{S1}$) et la polarité du flux magnétique ($\psi$) à travers le jeu d'enroulements (3) correspondant est négative, application d'une tension continue positive ($u_{comp}$) réglable aux bornes de l'enroulement primaire (4) du jeu d'enroulements (3) correspondant par l'unité de conversion (1),
d) répétition des étapes a) à c) jusqu'à ce que la valeur du flux magnétique ($\psi$) à travers le jeu d'enroulements (3) correspondant devienne inférieure à la valeur de seuil ($\psi_{S1}$),

e) après que la valeur du flux magnétique ($\psi$) à travers le jeu d'enroulements (3) correspondant soit devenue inférieure à la valeur de seuil ($\psi_{S1}$) et si la polarité du flux magnétique ($\psi$) à travers le jeu d'enroulements (3) correspondant est positive, application de la tension continue négative ($u_{comp}$) réglable aux bornes de l'enroulement primaire (4) du jeu d'enroulements (3) correspondant par l'unité de conversion (1) jusqu'à ce que la surface tension/temps relative à la tension continue négative ($u_{comp}$) appliquée soit inférieure ou égale en référence à une valeur de flux négative ($-\Delta\psi_S$) pouvant être prédéfinie, et

f) après que la valeur du flux magnétique ($\psi$) à travers le jeu d'enroulements (3) correspondant soit devenue inférieure à la valeur de seuil ($\psi_{S1}$) et si la polarité du flux magnétique ($\psi$) à travers le jeu d'enroulements (3) correspondant est négative, application de la tension continue positive ($u_{comp}$) réglable aux bornes de l'enroulement primaire (4) du jeu d'enroulements (3) correspondant par l'unité de conversion (1) jusqu'à ce que la surface tension/temps relative à la tension continue positive ($u_{comp}$) appliquée soit supérieure ou égale en référence à une valeur de flux positive ($\Delta\psi_S$) pouvant être prédéfinie.

2. Procédé selon la revendication 1, **caractérisé par** les étapes supplémentaires suivantes :

j) pendant les étapes e) et f), surveillance de la valeur du flux magnétique ($\psi$) de chaque jeu d'enroulements (3) par rapport à la valeur de seuil ($\psi_{S1}$), la polarité du flux magnétique ($\psi$) étant déterminée,

k) si, pendant l'étape e), la valeur du flux magnétique ($\psi$) à travers le jeu d'enroulements (3) correspondant dépasse la valeur de seuil ($\psi_{S1}$) et la polarité du flux magnétique ($\psi$) à travers le jeu d'enroulements (3) correspondant est positive, sortie de l'étape e) et poursuite avec les étapes b) et d), puis poursuite avec les étapes e) et f), et

l) si, pendant l'étape f), la valeur du flux magnétique ($\psi$) à travers le jeu d'enroulements (3) correspondant dépasse la valeur de seuil ($\psi_{S1}$) et la polarité du flux magnétique ($\psi$) à travers le jeu d'enroulements (3) correspondant est négative, sortie de l'étape f) et poursuite avec les étapes c) et d), puis poursuite avec les étapes e) et f).

3. Procédé selon la revendication 1, **caractérisé en ce que** la surveillance de la valeur du flux magnétique ($\psi$) et la détermination de la polarité du flux magnétique ($\psi$) sont effectuées au moyen de la surveillance d'un courant différentiel ($i_{Diff}$) par rapport à une valeur de seuil de courant différentiel ($i_{Diff1}$), le courant différentiel ($i_{Diff}$) étant déterminé à partir du courant ($i_1$) à travers l'enroulement primaire (4) et à partir du courant ($i'_2$) à travers l'enroulement secondaire (5) du jeu d'enroulements (3) correspondant.

4. Procédé selon la revendication 1, **caractérisé en ce que** la surveillance de la valeur du flux magnétique ($\psi$) est effectuée au moyen d'un modèle du flux magnétique ($\psi$).

Stand der Technik

Fig. 1

Stand der Technik

Fig. 2

Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6577111 B1